# EUROPÄISCHE PATENTSCHRIFT

(11) **EP 1 098 785 B1**
(45) Veröffentlichungstag und Bekanntmachung des Hinweises auf die Patenterteilung: **18.06.2003**
(21) Anmeldenummer: 99939386.1
(22) Anmeldetag: 21.07.1999
(51) Int. Cl.: B60K 41/28, F16H 61/00

(54) **VERFAHREN ZUR EINSTELLUNG EINER ÜBERSETZUNG EINES STUFENLOSEN AUTOMATGETRIEBES MIT EINEM VARIATOR**
METHOD FOR SETTING A MULTIPLICATION OF A CONTINUOUSLY VARIABLE AUTOMATIC TRANSMISSION EQUIPPED WITH A VARIATOR
PROCEDE DE REGLAGE D'UN RAPPORT DE TRANSMISSION D'UNE BOITE AUTOMATIQUE A RAPPORTS VARIABLES DE FACON CONTINUE, EQUIPEE D'UN VARIATEUR

(30) Priorität: 27.07.1998 DE 19833699
(43) Veröffentlichungstag der Anmeldung: 16.05.2001
(73) Patentinhaber: ZF FRIEDRICHSHAFEN Aktiengesellschaft, 88038 Friedrichshafen (DE)
(72) Erfinder: GIERLING, Armin, D-88085 Langenargen (DE)
(86) Internationale Anmeldenummer: EP9905179
(87) Internationale Veröffentlichungsnummer: WO00006412

(56) Entgegenhaltungen:
- WO-A1-97/46816
- DE-A1- 4 301 591
- US-A- 5 056 637

## Beschreibung

Die Erfindung betrifft ein Verfahren zur Einstellung einer Übersetzung eines stufenlosen Automatgetriebes (CVT) mit einem Variator für ein Kraftfahrzeug, mit einer elektronischen Getriebesteuerung (EGS), welche ein Steuergerät mit einem Mikrocomputer aufweist, das mit Sensoren und/oder externen Steuereinheiten zur Erfassung mehrerer Betriebsparameter sowie mit Aktuatoren verbunden ist, wobei durch die Aktuatoren eine Anfahrkupplung betätigbar ist.

Aus der Praxis sind Verfahren zur Verstellung der Übersetzung von Automatgetrieben bekannt, bei denen aufgrund bestimmter Eingangsgrößen an der elektronischen Getriebesteuerung (EGS), wie z. B. Fahrpedalstellung, Motordrehzahl, Drehzahlen von Primär- und Sekundärscheibe eines Variators und dergleichen, die Getriebeübersetzung mittels in der EGS abgelegter Kennfelder für eine Fahrstrategie unter üblichen Betriebsbedingungen eingestellt wird.

Für Stufenautomatgetriebe sind aus der Praxis auch Sonderprogramme für besondere Betriebsbedingungen bekannt, wie z.B. ein manuell von einem Fahrer über einen Schalter betätigbares Winterfahrprogramm zum besseren Anfahren bei niedrigen Fahrbahnreibwerten, d.h. schneebedeckter oder vereister Fahrbahn. Hierbei wird unter anderem vermieden, in den kleinsten Gang als Anfahrübersetzung zu schalten.

Dieses bekannte Winterfahrprogramm ist jedoch bei Automatgetrieben mit einem Variator nicht anwendbar, da deren Übersetzungsbereich im wesentlichen durch die mechanischen Anschläge des Schubgliederbandes des Variators bei kürzester möglicher Übersetzung (LOW) und längster möglicher Übersetzung (overdrive, OD) begrenzt ist. Üblicherweise haben CVT-Getriebe eine gegenüber Stufenautomatgetrieben größere Spreizung und ermöglichen entsprechend kürzere Anfahrübersetzungen, welche jedoch bei niedrigen Fahrbahnreibwerten Ursache für eine niedrige Anfahrleistung und geringe Anfahrstabilität sind.

Des weiteren hat es sich bei Automatgetrieben mit einem Variator als problematisch gezeigt, daß bei extremen Verzögerungen der Fahrgeschwindigkeit, wie z. B. bei Notbremsungen oder Eingriff eines Antiblockiersystems (ABS), die Einstellung der Übersetzung derart träge ist, daß bei einem sich an die Bremsung sofort anschließenden Beschleunigungsvorgang nicht die optimale Übersetzung des Getriebes vorliegt.

Die Anfahrleistung beim Wiederanfahren ist aufgrund eines noch zu kleinen Übersetzungsverhältnisses entsprechend schwach. Darüber hinaus treten an dem Antriebsstrang während einer extremen Verzögerung der Fahrgeschwindigkeit hohe Schleppmomente auf, welche die Fahrzeug-Fahrstabilität beeinträchtigen.

Der vorliegenden Erfindung liegt daher die Aufgabe zugrunde, ein Verfahren zur Verfügung zu stellen, mittels dem eine schnelle Anpassung der Übersetzung eines Automatgetriebes mit Variator (CVT-Getriebe) an eine kritische Fahrsituation, vor allem bei niedrigen Fahrbahnreibwerten und abrupten Bremsungen, möglich ist, wobei eine starke Anfahrleistung gewährleistet ist, und gleichzeitig die Schleppmomente des Antriebsstranges reduziert werden können, womit wiederum eine hohe Bremsstabilität des Fahrzeugs gewährleistet ist.

Erfindungsgemäß wird diese Aufgabe durch die in Anspruch 1 aufgeführten Verfahrensschritte gelöst.

Mit Hilfe des erfindungsgemäßen Verfahrens, welches in eine reguläre Fahrstrategie implementiert werden kann, ist vorteilhafterweise eine freie Übersetzungsverstellung zur Einstellung einer bedarfsgerechten Übersetzung beim Anfahren eines Kraftfahrzeuges oder beim Wiederanfahren nach einem starken Bremsvorgang möglich.

Durch das Öffnen der Anfahrkupplung wird der Variator von dem Motor oder dem Abtrieb abgekoppelt, und auf diese Weise wird wenigstens ein zusätzlicher Freiheitsgrad gewonnen.

Die Wirkung des erfindungsgemäßen Verfahrens im einzelnen ist abhängig vom Getriebetyp, d. h. ob die kraftflußführende Anfahrkupplung zur Vorwärtsfahrt im Getriebe auf der Sekundärseite, also abtriebsseitig, oder auf der Primärseite und damit motorseitig angeordnet ist.

Ist die Anfahrkupplung auf der Sekundärseite des Variators angeordnet, ist dieser bei geöffneter Anfahrkupplung von dem Abtrieb und den Rädern abgekoppelt.

Dadurch werden in vorteilhafter Weise die Schleppmomente des mit dem Rad verbundenen Teils des Antriebsstrangs beim Abbremsen reduziert, und der Variator kann unabhängig von der Abtriebsdrehzahl auf die zu einer aktuellen Fahrzeuggeschwindigkeit passende Übersetzung verstellt werden, mit welcher nach der Durchführung des erfindungsgemäßen Verfahrens weitergefahren werden kann.

Die Anwendung des erfindungsgemäßen Verfahrens bei Anordnung der kraftschlußschaltenden Vorwärts- bzw. Anfahrkupplung auf der Sekundärseite erweist sich als besonders vorteilhaft, wenn der Variator im Stillstand des Fahrzeuges verstellt wird. Der mit Motordrehzahl laufende Variator kann nämlich leicht verstellt werden, wenn die Anfahrkupplung während der Stillstandsverstellung des Variators ganz oder wenigstens teilweise geöffnet ist und eine Abkopplung des Variators von der Raddrehzahl gegeben ist.

Genau dieser beschriebene Umstand prädestiniert das erfindungsgemäße Verfahren z. B. für ein manuell wählbares Winterprogramm mit einer Übersetzungsvoreinstellung vor dem Anfahren bei niedrigem Fahrbahnreibwert, wodurch die Anfahrleistung und die Anfahrstabilität erheblich verbessert werden.

Das erfindungsgemäße Verfahren eignet sich aber auch für weitere Anwendungen. So ist es sehr vorteilhaft bei Bremsvorgängen mit starker Verringerung der Fahrzeuggeschwindigkeit wie bei einem Eingriff eines Antiblockiersystems (ABS).

Auch hier kann durch das erfindungsgemäße Verfahren eine reguläre Fahrstrategie zur Verbesserung der Fahrzeug-Fahrstabilität überlagert werden, wobei durch das Öffnen der Anfahrkupplung der Variator vom Abtrieb bzw. Rad getrennt wird.

Damit lassen sich die Schleppmomente des Antriebsstranges wirkungsvoll reduzieren und der Variator kann entsprechend frei auf die zur aktuellen Fahrzeuggeschwindigkeit oder Abtriebsdrehzahl des Getriebes passende Übersetzung eingestellt werden, mit der nach Beendigung des Programms weitergefahren wird.

In Kombination mit einer sekundärseitigen Anordnung der Anfahrkupplung kommen die Vorteile des erfindungsgemäßen Verfahrens optimal zur Geltung.

Jedoch zeigt das erfindungsgemäße Verfahren auch bei einer Anordnung der Anfahrkupplung auf der Primärseite des Variators Vorteile, zum Beispiel bei der oben beschriebenen Situation eines ABS-Eingriffs.

Der Variator bleibt hier mit dem Abtrieb bzw. Rad verbunden. Die Verstellung in Richtung längste mögliche Übersetzung (OD) reduziert die Trägheit des mit dem Rad verbundenen Antriebsstranges.
Durch das Öffnen der Anfahrkupplung wird der Variator von dem Motor abgekoppelt, wodurch die Schleppmomente des Antriebsstranges vorteilhafterweise weiter reduziert werden.

Des weiteren kann der Motor über eine Funktion innerhalb der elektronischen Motorsteuerung in vorteilhafter Weise auf eine definierte Drehzahl geführt werden, um die Ölversorgung für eine schnelle Variatorverstellung sicherzustellen. Dieser Vorteil ergibt sich, wenn eine Getriebeölpumpe mit der Motordrehzahl betrieben wird, da eine höhere Motordrehzahl zu einem schnelleren Druckaufbau führt.

Das erfindungsgemäße Verfahren stellt ein universell einsetzbares Programmodul für ein Automatgetriebe dar, wobei es sich insbesondere für CVT-Getriebe mit Umschlingungsvariator eignet, jedoch selbstverständlich auch in Automatgetrieben mit anderen Variatortypen Verwendung finden kann.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.
Es zeigt:
- Fig. 1: ein Flußdiagramm eines Verfahrens zur Einstellung einer Übersetzung eines CVT-Getriebes bei starker Verringerung der Fahrzeuggeschwindigkeit;
- Fig. 2: ein Flußdiagramm eines Verfahrens zur Einstellung einer Übersetzung eines CVT-Getriebes mit einer Winteranfahrstrategie, wobei eine Anfahrübersetzung eingestellt wird;
- Fig. 3: eine schematisierte Darstellung des Verlaufs der Übersetzung i_v in Abhängigkeit von der Fahrzeuggeschwindigkeit v_F oder der Abtriebsdrehzahl n_ab bei einem Bremsvorgang und
- Fig. 4: eine schematisierte Darstellung des Verlaufs der Übersetzung i_v in Abhängigkeit von der Fahrzeuggeschwindigkeit v_F oder der Abtriebsdrehzahl n_ab bei Verwendung einer Winteranfahrsteuerung.

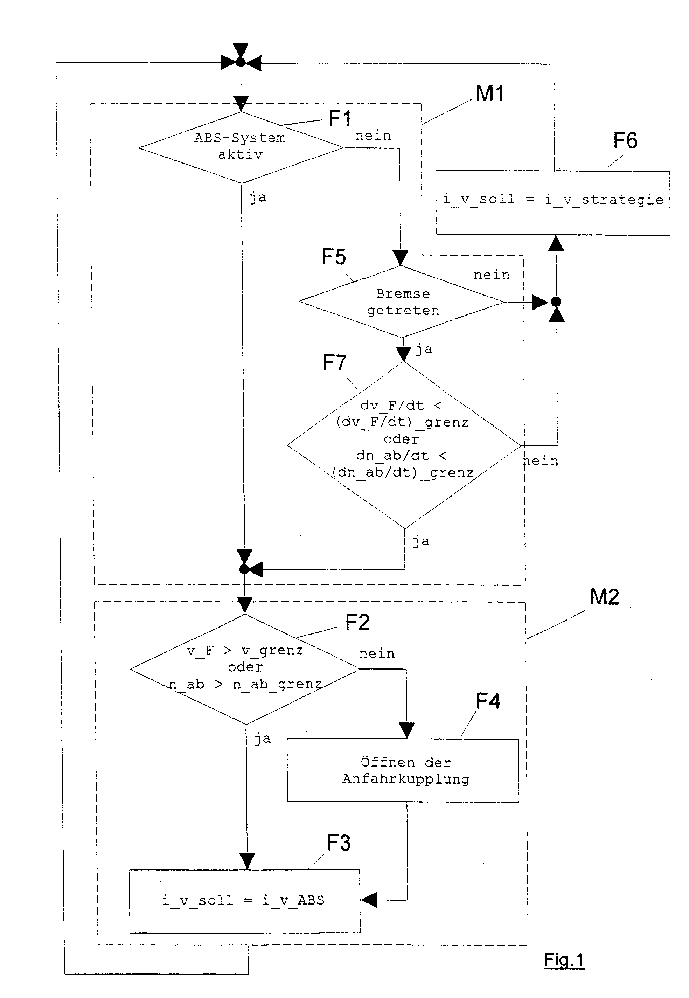

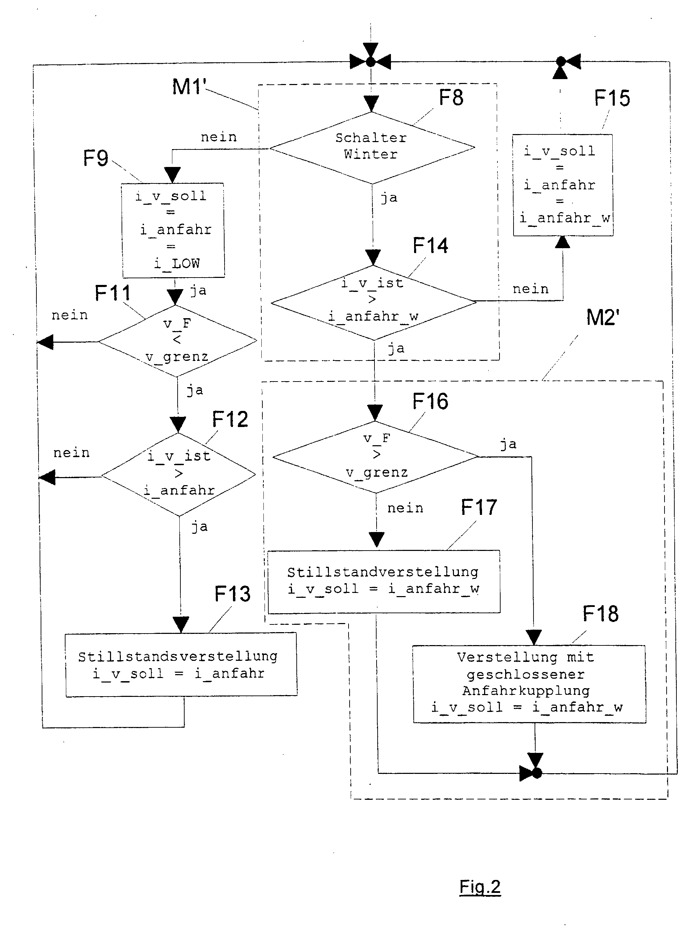

Bezug nehmend auf die Fig. 1 und 2 ist jeweils ein Flußdiagramm eines Verfahrens zur Einstellung einer Übersetzung eines CVT-Getriebes eines Kraftfahrzeuges mit abtriebsseitiger Anfahrkupplung dargestellt.

Dabei wird jeweils zuerst in einem Prüfmodul M1 bzw. M1' durch Vergleich von Eingangssignalen an einem Steuergerät einer elektronischen Getriebesteuerung mit vordefinierten Kenndaten ermittelt, ob eine vordefinierte Betriebssituation vorliegt, in der ein nachfolgendes Programmodul M2 bzw. M2' zur Anpassung einer vorliegenden Getriebeübersetzung i_v_ist an eine Fahrzeuggeschwindigkeit v_F oder an eine Abtriebsdrehzahl n_ab des Getriebes aktiviert wird.

Falls dies nicht der Fall ist, wird in einer Verarbeitungsfunktion F6 bzw. F9 oder F15 eine Getriebesollübersetzung i_v_strategie oder i_v_anfahr aus einem Kennfeld für eine reguläre Fahrstrategie als neue Getriebesollübersetzung i_v_soll bestimmt.

In dem nachfolgenden Programmodul M2 bzw. M2' zur Anpassung der Getriebesollübersetzung i_v_soll wird jeweils in einer Unterscheidungsfunktion F2 bzw. F16 geprüft, ob die Fahrzeuggeschwindigkeit v_F oder die Abtriebsdrehzahl n_ab des Getriebes größer als ein vorgegebener Grenzwert v_F_grenz oder n_ab_grenz ist.

Bei positivem Abfrageergebnis der Unterscheidungsfunktion F2 bzw. F16 wird bei geschlossener Anfahrkupplung eine vordefinierte, dem ermittelten Betriebszustand zugeordnete Getriebesollübersetzung i_v_ABS oder i_anfahr_w als neue Getriebesollübersetzung (i_v_soll) eingestellt.

Bei einem negativen Abfrageergebnis wird eine Verarbeitungsfunktion F4 bzw. F17 zum Öffnen der Anfahrkupplung gestartet und die dem ermittelten Betriebszustand zugeordnete Getriebesollübersetzung i_v_ABS bzw. i_anfahr_w als neue Getriebesollübersetzung i_v_soll eingestellt.

In dem Ausführungsbeispiel nach Fig. 1 ist die vordefinierte Betriebssituation in dem Prüfmodul M1 zur Aktivierung des Programmoduls M2, das zur Anpassung der Getriebesollübersetzung vorgesehen ist, eine bestimmte, vordefinierte Verringerung der Fahrzeuggeschwindigkeit dv_F/dt oder der Abtriebsdrehzahl dn_ab/dt des Getriebes.

Wie in Fig. 1 ersichtlich ist, wird in dem Prüfmodul M1 in einer ersten Unterscheidungsfunktion F1 geprüft, ob von einer ABS-Steuerung als externer Steuereinheit ein Signal "ABS aktiv", d.h. daß eine ABS-Bremsung vorliegt, über einen CAN-Bus an das Steuergerät ausgegeben wird.

Bei einem positiven Abfrageergebnis wird das Programmodul M2 gestartet.

Ergibt die erste Unterscheidungsfunktion F1 ein negatives Abfrageergebnis, wird in dem Prüfmodul M1 eine weitere Unterscheidungsfunktion F5 gestartet zur Prüfung, ob eine Bremse des Fahrzeuges betätigt ist.

Bei Vorhandensein eines Antiblockiersystems wird bei einer ABS-Bremsung ein Zeitgewinn erzielt, da die Verstellung der Getriebesollübersetzung i_v_soll ohne Abarbeitung weiterer Prüffunktionen und Berechnungen vorgenommen wird.

Durch die Unterscheidungsfunktion F5, die im vorliegenden Fall an einen Bremslicht- oder Bremsdruckschalter gekoppelt ist, wird jedoch eine starke Bremsung auch bei fehlendem Antiblockiersystem oder bei defekter ABS-Steuerung erkannt.

Zur Erkennung eines starken Bremsvorganges kann auch ein Sensors an der Abtriebswelle vorgesehen sein, welcher die Bremsung als Drehzahlverringerung aufnimmt und an das Steuergerät weitergibt.

Falls in der Unterscheidungsfunktion F5 keine Bremsung erkannt wird, wird ein Verarbeitungsmodul F6 zur Anpassung der Getriebesollübersetzung i_v_soll an eine vorgegebene, reguläre Getriebeübersetzung i_v_strategie gestartet, wobei nach der Abarbeitung oder dem Abbruch des Verarbeitungsmoduls F6 das Prüfmodul M1 erneut gestartet wird.

Die vorgegebene Getriebeübersetzung i_v_strategie entspricht der Getriebeübersetzung während dem normalen Fahrbetrieb, die in der elektronischen Getriebesteuerung EGS in einem Kennfeld abgelegt ist und mit der aktuellen Fahrzeuggeschwindigkeit oder der Abtriebsdrehzahl korrespondiert.

Falls in der Unterscheidungsfunktion F5 eine Bremsung erkannt wird, wird eine Prüffunktion F7 gestartet zur Ermittlung, ob die Fahrzeuggeschwindigkeitsverringerung dv_F/dt oder die Abtriebsdrehzahlverringerung dn_ab/dt kleiner als ein in einem Kennfeld abgelegter Grenzwert (dv_F/dt)_grenz oder (dn_ab/dt)_grenz ist, wobei (dv_F/dt)_grenz = f(v_F) oder (dn_ab/dt)_grenz = f(n_ab) gilt.

Die Verzögerung wird in der EGS berechnet, so daß das Verfahren auf diesem Weg auch ohne ein ABS-System eingesetzt werden kann.

Bei einem negativen Abfrageergebnis der Prüffunktion F7 wird die Verarbeitungsfunktion F6 zur Anpassung der Getriebesollübersetzung i_v_soll an die vorgegebene, reguläre Getriebeübersetzung i_v_strategie gestartet, und nach der Abarbeitung oder dem Abbruch der Verarbeitungsfunktion F6 wird das Prüfmodul M1 erneut aktiviert.

Liefert die Prüffunktion F7 ein positives Abfrageergebnis, wird das Programmodul M2 gestartet, wobei das Verfahren in der oben beschriebenen Art und Weise durchgeführt wird.

Falls nämlich in der Unterscheidungsfunktion F2 des Programmoduls M2 erkannt wird, daß die Fahrzeuggeschwindigkeit v_F oder die Abtriebsdrehzahl n_ab des Getriebes nicht größer als der vorgegebene Grenzwert ist, der einer niedrigen Fahrgeschwindigkeit oder Abtriebsdrehzahl entspricht, wird eine Verarbeitungsfunktion F4 zum Öffnen der Anfahrkupplung gestartet und die Getriebesollübersetzung i_v_soll bei abgekoppeltem Variator in einer Verarbeitungsfunktion F3 auf eine Getriebesollübersetzung für ABS-Bremsungen i_v_ABS verstellt.

Nach Einstellung der Getriebesollübersetzung für ABS-Bremsungen i_v_ABS oder Abbruch der Verarbeitungsfunktion F3 wird in das Prüfmodul M1 zurückverzweigt.

Bei einem positiven Abfrageergebnis der Unterscheidungsfunktion F2, d. h. daß die Fahrzeuggeschwindigkeit v_F oder die Abtriebsdrehzahl n_ab des Getriebes größer als der vorgegebene Grenzwert ist, wird das Verarbeitungsfunktion F3 zur Einstellung der Getriebesollübersetzung i_v_ABS sofort gestartet und bei geschlossener Anfahrkupplung abgearbeitet, so daß die Übersetzung des Getriebes oder des Variators bei geschlossenem Antriebsstrang verstellt wird.

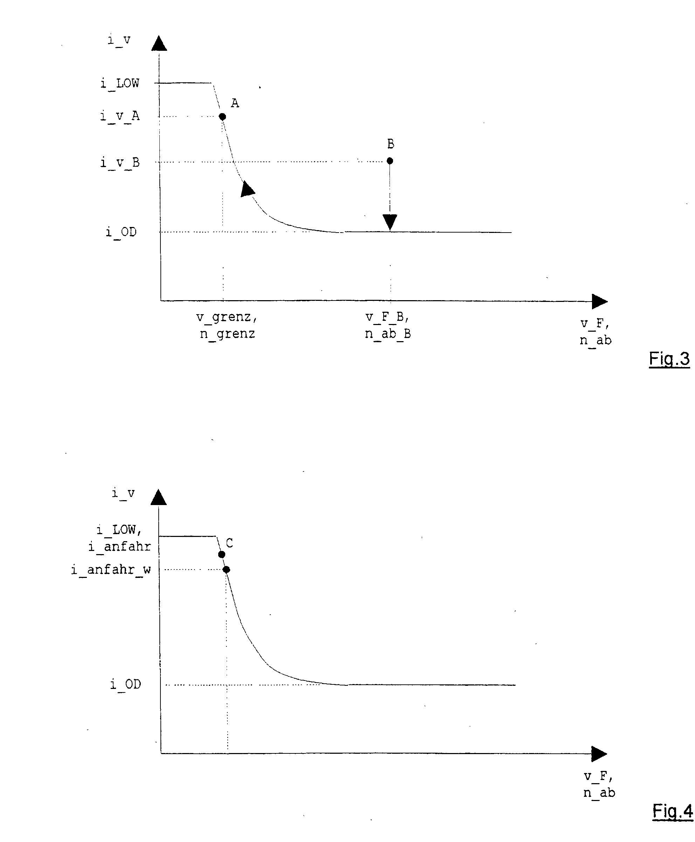

Fig. 3 zeigt für eine ABS-Bremsung eine schematisierte Darstellung eines qualitativen Verlaufs der Übersetzung i_v in Abhängigkeit der Fahrzeuggeschwindigkeit v_F oder der Abtriebsdrehzahl n_ab. Dabei liegt vor der Bremsung in einem Betriebspunkt B zunächst eine Übersetzung i_v_B bei einer Fahrzeuggeschwindigkeit v_F_B vor. Unmittelbar vor der Bremsung wird die Übersetzung, korrespondierend zur Gaspedalrücknahme des Fahrers, bei rollendem Fahrzeug in Richtung der Overdrive-Übersetzung i_OD verstellt, da bei geschlossener Anfahrkupplung mit dieser Übersetzung die geringsten Schleppmomente am Antriebsstrang vorhanden sind.

Während der ABS-Bremsung wird die Übersetzung i_v entlang einer vorgegebenen Kennlinie bis zu einer Fahrzeuggeschwindigkeit v_grenz, die einen Grenzwert in einem Betriebspunkt A mit einer dazugehörigen Übersetzung i_v_A darstellt, verstellt. Die Anfahrkupplung ist dabei noch geschlossen. Bei Erreichen des Betriebspunktes A wird der Variator abtriebsseitig abgetrennt, d.h. die auf der Sekundärseite des Variators angeordnete Anfahrkupplung wird geöffnet. In diesem Zustand kann der mit Motordrehzahl rotierende Variator in die Anfahrübersetzung i_anfahr gefahren werden.

Fig. 2 zeigt ein Flußdiagramm einer Variante des in Fig. 1 vorgestellten Verfahrens, wobei hier die vordefinierte Betriebssituation in dem Prüfmodul M1' zur Aktivierung des nachfolgenden Programmoduls M2' ein Anfahren bei niedrigem Fahrbahnreibwert und die Aktivierung einer "Winterfahrstrategie" darstellt.

Dem entsprechend wird zuerst in dem Prüfmodul M1' in einer ersten Unterscheidungsfunktion F8 geprüft, ob von dem Steuergerät ein Schalter "Winterfahrstrategie" als aktiviert erkannt wird.

Im vorliegenden Ausführungsbeispiel kann ein Fahrer die Winterfahrstrategie vor dem Losfahren manuell über einen Schalter anwählen. Wenn dies der Fall ist, wird eine weitere Unterscheidungsfunktion F14 aktiviert zur Ermittlung, ob die vorliegende Getriebeübersetzung i_v_ist größer als eine dem ermittelten Betriebszustand zugeordnete Winteranfahrübersetzung i_anfahr_w ist. Falls nein, wird als Normalanfahrübersetzung i_anfahr in der Verarbeitungsfunktion F15 die Winteranfahrübersetzung i_anfahr_w bestimmt.

Wenn die erste Unterscheidungsfunktion F8 das Ergebnis liefert, daß der Schalter "Winterfahrstrategie" nicht betätigt ist, wird als Normalanfahrübersetzung i_anfahr in einer Verarbeitungsfunktion F9 die kürzestmögliche Übersetzung i_LOW bestimmt und in einer zugeordneten Unterscheidungsfunktion F11 geprüft, ob die Fahrzeuggeschwindigkeit v_F oder die Abtriebsdrehzahl n_ab des Getriebes kleiner als ein vorgegebener Grenzwert v_grenz oder n_ab_grenz ist.

Falls dies zutrifft, wird eine weitere Unterscheidungsfunktion F12 gestartet zur Prüfung, ob die vorliegende Getriebeübersetzung i_v_ist größer ist als die Normalanfahrübersetzung i_anfahr.

Wenn die Fahrzeuggeschwindigkeit v_F oder die Abtriebsdrehzahl n_ab des Getriebes größer ist als der Grenzwert v_grenz oder n_ab_grenz, oder wenn die Getriebeübersetzung i_v_ist kleiner ist als die Normalanfahrübersetzung i_anfahr, wird in das erste Prüfmodul M1' zurückverzweigt.

Ist jedoch die vorliegende Getriebeübersetzung i_v_ist größer als die Normalanfahrübersetzung i_anfahr, wird die Normalanfahrübersetzung i_anfahr als Getriebesollübersetzung i_v_soll eingestellt, bevor in das Prüfmodul M1' zurückverzweigt wird.

Die Winteranfahrübersetzung i_anfahr_w des Getriebes stellt einen diskreten Wert dar, der zwischen der kürzestmöglichen und damit größten Übersetzung i_LOW und der längsten Übersetzung i_OD des Getriebes, d. h. zwischen den mechanischen Anschlägen des Variators, liegt.

Damit ist gewährleistet, daß bei niedrigen Fahrbahnreibwerten mit der kleineren Übersetzung i_anfahr_w angefahren wird, um beispielsweise ein Durchdrehen der Räder auf glattem Untergrund vermeidet. Die Winterfahrsteuerung wird manuell von dem Fahrer des Fahrzeuges über einen Schalter im Innenraum des Fahrzeuges angewählt.

Fig. 4 verdeutlicht die Wirkung des Verfahrens nach Fig. 2 bei Betätigung des Schalters "Winterfahrstrategie" und zeigt eine schematisierte Darstellung des Verlaufs der Übersetzung i_v in Abhängigkeit von der Fahrzeuggeschwindigkeit v_F oder der Abtriebsdrehzahl n_ab.

Aktiviert der Fahrer die Winterfahrstrategie bei stehendem Fahrzeug, wird durch eine Stillstandsverstellung des Variators die latent in der elektronischen Getriebesteuerung abgelegte Winteranfahrübersetzung i_anfahr_w eingestellt. Bei Deaktivierung des Schalters "Winterfahrstrategie" vor dem Anfahren wird der Variator wiederum vom Abtrieb entkoppelt und die Normalanfahrübersetzung i_LOW eingestellt.

Wenn der Schalter "Winterfahrstrategie" in einem Betriebspunkt C aktiviert wird, in dem die vorliegende Übersetzung i_v_C größer ist als die Winteranfahrübersetzung i_anfahr_w und die Fahrzeuggeschwindigkeit kleiner als eine Grenzgeschwindigkeit v_grenz ist, wird die Anfahrkupplung ebenfalls geöffnet und der Variator in die Winteranfahrübersetzung i_anfahr_w verstellt.

In den vorliegenden Ausführungen wird die freie Verstellung der Übersetzung bei der ABS-Bremsung oder der Winterfahrstrategie in diskreten Werten vorgenommen, jedoch können die einzustellenden freien Übersetzungen auch variabel von der elektronischen Getriebesteuerung gebildet werden, beispielsweise in Verbindung mit einer Fuzzy-Logic-Programmierung, ausgehend von den aktuellen Betriebsparametern.

### Bezugszeichen

- F2, F5, F7, F8, F11, F12, F14, F16: Unterscheidungsfunktion
- F3, F4, F6, F9, F13, F15, F17, F18: Verarbeitungsfunktion
- i_anfahr: Anfahrübersetzung
- i_anfahr_w: Winteranfahrübersetzung
- i_LOW: kürzeste mögliche Übersetzung
- i_OD: längste mögliche Übersetzung, overdrive
- i_v_ist: Übersetzung des Getriebes
- i_v_A, i_v_B, i_v_C: Übersetzung im Betriebspunkt A, B, C
- i_v_ABS: Übersetzung bei einer ABS-Bremsung
- i_v_soll: Getriebesollübersetzung
- i_v_strategie: Übersetzung der "normalen" oder "regulären" Fahrstrategie
- M1, M1', M2, M2': Programmodul, Prüfmodul
- n_ab: Abtriebsdrehzahl des Getriebes
- n_ab_A, n_ab_B,: Abtriebsdrehzahl im Betriebspunkt A, B,
- n_ab_C: oder C
- dn_ab/dt: Verzögerung der Abtriebsdrehzahl
- (dn_ab/dt)_grenz: Grenzwert der Verzögerung der Abtriebsdrehzahl
- v_F v_F_C: Fahrzeuggeschwindigkeit
- v_F_A, v_F_B,: Fahrzeuggeschwindigkeit im Betriebspunkt A, B, C
- v_grenz: Grenzwert der Fahrzeuggeschwindigkeit
- dv_F/dt: Verringerung Fahrzeuggeschwindigkeit
- (dv_F/dt)_grenz: Grenzwert der Verzögerung der Fahrzeuggeschwindigkeit

## Patentansprüche

1. Verfahren zur Einstellung einer Übersetzung eines stufenlosen Automatgetriebes mit einem Variator (CVT-Getriebe) für ein Kraftfahrzeug, mit einer elektronischen Getriebesteuerung, welche ein Steuergerät mit einem Mikrocomputer aufweist, das mit Sensoren und/oder externen Steuereinheiten zur Erfassung mehrerer Betriebsparameter sowie mit Aktuatoren verbunden ist, wobei durch die Aktuatoren eine Anfahrkupplung betätigbar ist, **gekennzeichnet durch** folgende, von der elektronischen Getriebesteuerung ausgeführten Verfahrensschritte:
a) in einem Prüfmodul (M1 bzw. M1') wird **durch** Vergleich von Eingangssignalen der sensoren und/oder externen Steuereinheiten in das Steuergerät mit vordefinierten Kenndaten ermittelt, ob eine vordefinierte Betriebssituation vorliegt, in der nachfolgend ein Programmodul (M2 bzw. M2') zur Anpassung einer vorliegenden Getriebeübersetzung (i_v_ist) an eine Fahrzeuggeschwindigkeit (v_F) oder an eine Abtriebsdrehzahl (n_ab) des Getriebes aktiviert wird;
falls nein, wird in einer Verarbeitungsfunktion (F6 bzw. F9 oder F15) eine Getriebesollübersetzung (i_v_strategie, i_v_anfahr) aus einem Kennfeld für eine reguläre Fahrstrategie als neue Getriebesollübersetzung (i_v_soll) bestimmt;
b) in dem Programmodul (M2 bzw. M2') zur Anpassung der Getriebesollübersetzung (i_v_soll) wird in einer Unterscheidungsfunktion (F2 bzw. F16) geprüft, ob die Fahrzeuggeschwindigkeit (v_F) oder die Abtriebsdrehzahl (n_ab) des Getriebes größer als ein vorgegebener Grenzwert (v_F_grenz, n_ab_grenz) ist;
c) bei positivem Abfrageergebnis der Unterscheidungsfunktion (F2 bzw. F16) wird bei geschlossener Anfahrkupplung eine vordefinierte, dem ermittelten Betriebszustand zugeordnete Getriebesollübersetzung (i_v_ABS, i_anfahr_w) als neue Getriebesollübersetzung (i_v_soll) eingestellt;
bei einem negativen Abfrageergebnis wird eine Verarbeitungsfunktion (F4 bzw. F17) zum wenigstens teilweisen Öffnen der Anfahrkupplung gestartet und die dem ermittelten Betriebszustand zugeordnete Getriebesollübersetzung (i_v_ABS, i_anfahr_w) als neue Getriebesollübersetzung (i_v_soll) eingestellt.

2. Verfahren nach Anspruch 1, **dadurch gekennzeichnet, daß** die vordefinierte Betriebssituation in dem Prüfmodul (M1) zur Aktivierung des Programmoduls (M2), das zur Anpassung der Getriebesollübersetzung vorgesehen ist, eine vordefinierte Fahrzeuggeschwindigkeitsverringerung (dv_F/dt) oder Abtriebsdrehzahlverringerung (dn_ab/dt) ist.

3. Verfahren nach Anspruch 1 oder 2, **dadurch gekennzeichnet, daß** in dem Prüfmodul (M1) in einer ersten Unterscheidungsfunktion (F1) geprüft wird, ob von einer ABS-Steuerung als externer Steuereinheit ein Signal "ABS aktiv' an das Steuergerät ausgegeben wird; falls ja, wird das Programmodul (M2) gestartet.

4. Verfahren nach Anspruch 1, 2 oder 3, **dadurch gekennzeichnet, daß** in dem Prüfmodul (M1) eine weitere Unterscheidungsfunktion (F5) gestartet wird zur Prüfung, ob eine Bremse des Fahrzeuges betätigt ist.

5. Verfahren nach Anspruch 4, **dadurch gekennzeichnet, daß** die weitere Unterscheidungsfunktion (F5) bei einem negativen Abfrageergebnis der Unterscheidungsfunktion (F1) gestartet wird.

6. Verfahren nach Anspruch 5, **dadurch gekennzeichnet, daß** bei einem negativen Abfrageergebnis der weiteren Unterscheidungsfunktion (F5) die Verarbeitungsfunktion (F6) zur Anpassung der Getriebesollübersetzung (i_v_soll) an die vorgegebene, reguläre Getriebeübersetzung (i_v_strategie) gestartet wird, und nach der Abarbeitung oder dem Abbruch der Verarbeitungsfunktion (F6) das Prüfmodul (M1) erneut aktiviert wird.

7. Verfahren nach Anspruch 4, 5 oder 6, **dadurch gekennzeichnet, daß** bei einem positiven Abfrageergebnis der weiteren Unterscheidungsfunktion (F5) eine Prüffunktion (F7) gestartet wird zur Ermittlung, ob die Fahrzeuggeschwindigkeitsveringerung (dv_F/dt) oder die Abtriebsdrehzahlverringerung (dn_ab/dt) kleiner als ein vorgegebener Grenzwert ((dv_F/dt) _grenz, (dn_ab/dt)_grenz) ist.

8. Verfahren nach Anspruch 7, **dadurch gekennzeichnet, daß** bei einem negativen Abfrageergebnis der Prüffunktion (F7) die Verarbeitungsfunktion (F6) zur Anpassung der Getriebesollübersetzung (i_v_soll) an die vorgegebene, reguläre Getriebeübersetzung (i_v_strategie) gestartet wird, und nach der Abarbeitung oder dem Abbruch der Verarbeitungsfunktion (F6) das Prüfmodul (M1) erneut aktiviert wird.

9. Verfahren nach Anspruch 7 oder 8, **dadurch gekennzeichnet, daß** bei einem positiven Abfrageergebnis der Prüffunktion (F7) das Programmodul (M2) gestartet wird.

10. Verfahren nach einem der Ansprüche 2 bis 9, **dadurch gekennzeichnet, daß** die vorgegebenen Werte der Getriebesollübersetzung (i_v_soll), die Grenzwerte der Fahrzeuggeschwindigkeitsverringerung ((dv_F/dt)_grenz = f(v_F)) bzw. der Abtriebsdrehzahlverringerung ((dn_ab/dt)_grenz = f(n_ab)) in einem Kennfeld der Getriebesteuerung abgelegt sind.

11. Verfahren nach Anspruch 1, **dadurch gekennzeichnet, daß** die vordefinierte Betriebssituation in dem Prüfmodul (M1') zur Aktivierung des Programmmoduls (M2') ein Anfahren bei niedrigem Fahrbahnreibwert darstellt.

12. Verfahren nach Anspruch 11, **dadurch gekennzeichnet, daß** in dem Prüfmodul (M1') in einer ersten Unterscheidungsfunktion (F8) geprüft wird, ob von dem Steuergerät ein Schalter "Winterfahrstrategie" als aktiviert erkannt wird.

13. Verfahren nach Anspruch 12, **dadurch gekennzeichnet, daß** bei einem positiven Abfrageergebnis der ersten Unterscheidungsfunktion (F8) eine weitere Unterscheidungsfunktion (F14) aktiviert wird zur Ermittlung, ob die vorliegende Getriebeübersetzung (i_v_ist) größer als eine dem ermittelten Betriebszustand zugeordnete Winteranfahrübersetzung (i_anfahr_w) ist; falls nein, wird als Normalanfahrübersetzung (i_anfahr) in der Verarbeitungsfunktion (F15) die Winteranfahrübersetzung (i_anfahr_w) bestimmt.

14. Verfahren nach einem der Ansprüche 1, 11, 12 oder 13, **dadurch gekennzeichnet, daß** die Winteranfahrübersetzung (i_anfahr_w) des Getriebes zwischen einer kürzestmöglichen Übersetzung (i_LOW) und einer längstmöglichen Übersetzung (i_OD) des Getriebes liegt.

15. Verfahren nach Anspruch 12, **dadurch gekennzeichnet, daß** bei einem negativen Abfrageergebnis der ersten Unterscheidungsfunktion (F8) als Normalanfahrübersetzung (i_anfahr) in der Verarbeitungsfunktion (F9) die kurzestmögliche Übersetzung (i_LOW) bestimmt wird; und in einer zugeordneten Unterscheidungsfunktion (F11) geprüft wird, ob die Fahrzeuggeschwindigkeit (v_F) oder die Abtriebsdrehzahl (n_ab) des Getriebes kleiner als ein vorgegebener Grenzwert (v_grenz, n_ab_grenz) ist.

16. Verfahren nach Anspruch 15, **dadurch gekennzeichnet, daß** bei einem Abfrageergebnis der zugeordneten Unterscheidungsfunktion (F11), daß die Fahrzeuggeschwindigkeit (v_F) oder die Abtriebsdrehzahl (n_ab) des Getriebes kleiner als der Grenzwert (v_grenz, n_ab_grenz) ist, eine weitere Unterscheidungsfunktion (F12) gestartet wird zur Prüfung, ob die vorliegende Getriebeübersetzung (i_v_ist) größer als die Normalanfahrübersetzung (i_anfahr) ist.

17. Verfahren nach Anspruch 15, **dadurch gekennzeichnet, daß** in das Prüfmodul (M1') zurückverzweigt wird, falls die Fahrzeuggeschwindigkeit (v_F) oder die Abtriebsdrehzahl (n_ab) des Getriebes größer als der Grenzwert (v_grenz, n_ab_grenz) oder die Getriebeübersetzung (i_v_ist) kleiner als die Normalanfahrübersetzung (i_anfahr) ist.

18. Verfahren nach Anspruch 16 oder 17, **dadurch gekennzeichnet, daß** die Normalanfahrübersetzung (i_anfahr) als Getriebesollübersetzung (i_v_soll) eingestellt wird, falls die vorliegende Getriebeübersetzung (i_v_ist) größer als die Normalanfahrübersetzung (i_anfahr) ist, bevor in das Prüfmodul (M1') zurückverzweigt wird.

19. Verfahren nach den Ansprüchen 11 bis 18, **dadurch gekennzeichnet, daß** in dem Prüfmodul (M1') in der ersten Unterscheidungsfunktion (F8) geprüft wird, ob von dem Steuergerät ein Fahrzustand "Winter" über eine Auswertung von Fahrzustandsgrößen erkannt wird.

20. Verfahren nach einem der vorhergehenden Ansprüche, **dadurch gekennzeichnet, daß** die vordefinierte Getriebesollübersetzung (i_v_ABS, i_anfahr_w) als diskrete Größe in der elektronischen Getriebesteuerung abgelegt ist.

21. Verfahren nach einem der vorhergehenden Ansprüche, **dadurch gekennzeichnet, daß** die vordefinierte Getriebesollübersetzung (i_v_ABS, i_anfahr_w) innerhalb der elektronischen Getriebesteuerung berechnet wird, abhängig vom jeweiligen Betriebspunkt.

22. Verfahren nach einem der vorhergehenden Ansprüche, **dadurch gekennzeichnet, daß** die Anfahrkupplung auf der Sekundärseite des Variators angeordnet ist.

## Claims

1. The invention relates to a method for setting a multiplication of a continuously variable variator-equipped automatic transmission (CVT) for a motor vehicle, fitted with an electronic transmission control system featuring a control unit with a microcomputer linked to sensors and / or external control units for recording several operating parameters, and to actuators for actuating a starting clutch, ***characterized***
**by** the following process sequences executed by the electronic control system:
a) a test module (M1 or M1') is used to compare pre-defined characteristics with the control unit's input signals from the sensors and /or external control units in order to determine whether a pre-defined operating situation is present, in which subsequently a program module (M2 or M2') is activated to gear an existing transmission ratio (i_v_actual) to a vehicle speed (v_F) or to an output speed (n_out) of the transmission;
if this is not the case, a transmission nominal ratio (i_v_strategy, i_v_start) is determined as new transmission nominal ratio (i_v_nominal) by means of a processing function (F6 or F9 or F15) on the basis of performance data for a regular driving strategy;
b) by means of a discrimination function (F2 or F16), the program module (M2 or M2') for adjustment of the transmission nominal ratio (i_v_nominal) is used to determine whether the vehicle speed (v_F) or the output speed (n_out) of the transmission exceeds a specified limit value (v_F_limit, n_out_limit);
c) in case of positive inquiry results of the discrimination function (F2 or F16) and with closed starting clutch, a pre-defined transmission nominal ratio (i_v_ABS, i_start_w) geared to the operating condition determined is set;
in case of negative inquiry results, a processing function (F4 or F17) is started for at least partial opening of the starting clutch and the transmission nominal ratio (i_v_ABS, i_start_w) geared to the operating condition determined is set as new transmission nominal ratio (i_v_nominal).

2. Method according to claim 1, **characterized**
**in that** the pre-defined operating condition in the test module (M1) for activation of the program module (M2), which is provided for adjustment of the transmission nominal ratio, is either a pre-defined vehicle speed reduction (dv_F/dt) or an output speed reduction (dn_out/dt).

3. Method according to claim 1 or 2, **characterized**
**in that** a first discrimination function (F1) in the test module (M1) checks whether an ABS control unit as external control unit sends an "ABS active" signal to the control unit; if this is the case, the program module (M2) is started.

4. Method according to claim 1, 2 or 3, **characterized**
**in that** in the test module (M1) a further discrimination function (F5) is started to check whether a brake of the vehicle is activated.

5. Method according to claim 4, **characterized**
**in that** a further discrimination function F5) is started in case of a negative inquiry result of the discrimination function (F1).

6. Method according to claim 5, **characterized**
**in that** in case of a negative inquiry result of the further discrimination function (F5), the processing function (F6) for gearing the transmission nominal ratio (i_v_nominal) to the specified regular transmission ratio (i_v_strategy) is started, and that the test module (M1) is re-activated following completion or abortion of the processing function (F6).

7. Method according to claim 4, 5 or 6, **characterized**
**in that** following a positive inquiry result of the further discrimination function (F5) a test function (F7) is started to determine whether the vehicle speed reduction (dv_F/dt) or the output speed reduction (dn_put/dt) is smaller than a specified limit value ((dv_F/dt)_limit, (dn_out/dt)_limit).

8. Method according to claim 7, **characterized**
**in that** in case of a negative inquiry result of the test function (F7), the processing function (F6) for gearing the transmission nominal ratio (i_v_nom) to the specified regular transmission ratio (i_v_strategy) is started, and that the test module (M1) is re-activated following completion or abortion of the processing function (F6).

9. Method according to claim 7 or 8, **characterized**
**in that** the program module (M2) is started in case of a positive inquiry result of the test function (F7).

10. Method according to one of the claims 2 to 9, **characterized**
**in that** the specified values of the transmission nominal ratio (i_v_nominal), the limit values of the vehicle speed reduction ((dv_F/dt)_limit = f(v_F)) or the output speed reduction ((dn_out/dt)_limit = f (n_out)) are filed in transmission control characteristics.

11. Method according to claim 1, **characterized**
**in that** the pre-defined operating condition in the test module (M1') for activating the program module (M2') represents a start with low skid number.

12. Method according to claim 11, **characterized**
**in that** a first discrimination function (F8) in the test module (M1') checks whether the control unit recognizes activation of a switch for "winter driving strategy".

13. Method according to claim 12, **characterized**
**in that** in case of a positive inquiry result of the first discrimination function (F8) a further discrimination function (F14) is activated to determine whether the present transmission ratio (i_v_actual) exceeds a winter starting ratio (i_start_w) geared to the operating condition determined;
if this is not the case, the processing function (F15) specifies the winter starting ratio (i_start_w) as normal starting ratio (i_start).

14. Method according to one of the claims 1, 11, 12 or 13, **characterized**
**in that** the winter starting ratio (i_start_w) of the transmission is between a shortest-possible ratio (i_low) and a longest-possible ratio (i_od) of the transmission.

15. Method according to claim 12, **characterized**
**in that** in case of a negative inquiry result of the first discrimination function (F8), the shortest-possible ratio (i_low) is specified by the processing function (F9) as normal starting ratio (i_start); and that a specified discrimination function (F11) checks whether the vehicle speed (v_F) or the output speed (n_out) of the transmission is smaller than a specified limit value (v_limit, n_out_limit).

16. Method according to claim 15, **characterized**
**in that** if the inquiry result of the specified discrimination function (F11) is that the vehicle speed (v_F) or the output speed (n_out) of the transmission is smaller than the limit value (v_limit, n_out_limit), a further discrimination function (F12) will be started to check whether the present transmission ratio (i_v_actual) exceeds the normal starting ratio (i_start).

17. Method according to claim 15, **characterized**
**in that** reverse branching to the test module (M1') is performed if the vehicle speed (v_F) or the output speed (n_out) of the transmission exceeds the limit value (v_limit, n_out_limit) or the transmission ratio (i_v_actual) is smaller than the normal starting ratio (i_start).

18. Method according to claim 16 or 17, **characterized**
**in that** the normal starting ratio (i_start) is set as transmission nominal ratio (i_v_nom) if the present transmission ratio (i_v_actual) exceeds the normal starting ratio (i_start) prior to reverse branching to the test module (M1').

19. Method according to claims 11 to 18, **characterized**
**in that** a first discrimination function (F8) in the test module (M1') checks whether the control unit recognizes a driving condition "winter" on the basis of driving condition parameters analyzed.

20. Method according to one of the preceding claims, **characterized**
**in that** the pre-defined transmission nominal ratio (i_v_ABS, i_start_w) is filed in the electronic transmission control as discrete value.

21. Method according to one of the preceding claims, **characterized**
**in that** the pre-defined transmission nominal ratio (i_v_ABS, i_start_w) is calculated in the electronic transmission control, dependent on the respective operating point.

22. Method according to one of the preceding claims, **characterized**
**in that** the starting clutch is arranged on the secondary side of the variator.

## Revendications

1. Méthode de réglage d'un rapport de démultiplication d'une boîte de vitesses automatique à variation continue dotée d'un variateur (boîte CVT) pour un véhicule automobile, dotée d'un calculateur électronique de BVA, celui-ci étant équipé d'un dispositif de commande avec un micro-ordinateur, étant connecté à des capteurs et/ou à des unités de commande externes pour l'enregistrement de plusieurs paramètres de fonctionnement et étant connecté à des actionneurs, sachant qu'au moyen des actionneurs est actionné un embrayage de démarrage, **caractérisée par** les processus suivants exécutés par le calculateur électronique de la boîte de vitesses :
a) dans un module de test (M1 et/ou M') est déterminé - par la comparaison des signaux d'entrée (des capteurs et/ou des unités de commande externes) transmis au dispositif de commande comprenant de données de références pré-définies - s'il y a une température de fonctionnement pré-définie en activant un module de programme (M2 et/ou M2') pour l'adaptation d'un rapport de démultiplication existant (i_v_ist) à une vitesse de véhicule (v_F) ou à un régime de sortie (n_ab) de la boîte de vitesses; dans le cas contraire, au moyen d'une fonction de traitement (F6 ou F9 ou F15) est déterminé un rapport de démultiplication (i_v_strategie, i_v_anfahr) à partir d'un champ caractéristique pour une stratégie de conduite en tant que nouveau rapport de démultiplication de la boîte de vitesses i_v_soll);
b) dans le module de programme (M2 et/ou M2') pour l'adaptation d'un rapport de démultiplication (i_v_soll) au moyen d'une fonction de différenciation (F2 et/ou F16) est vérifié, si la vitesse du véhicule (v_F) ou le régime e sortie (n_ab) de la boîte de vitesses sont plus élevés d'une valeur limite (v_F_grenz, n_ab_grenz) donnée;
c) en cas d'un résultat positif de la requête de la fonction de différenciation (F2 et/ou F16), avec embrayage de démarrage fermé, est réglé un rapport de démultiplication de la boîte de vitesses pré-défini et associé à l'état de fonctionnement déterminé (i_v_ABS, i_anfahr_w) en tant que nouveau rapport de démultiplication nominal de la boîte de vitesses (i_v_soll) ;
en cas d'un résultat négatif de la requête de la fonction de différenciation est démarrée une fonction de traitement (F4 et/ou F17) pour ouvrir au moins partiellement l'embrayage de démarrage et pour régler le rapport de démultiplication nominal associé à l'état de fonctionnement déterminé (i_v_ABS, i_anfahr_w) en tant que nouveau rapport de démultiplication de la boîte de vitesses (i_v_soll).

2. Méthode selon la revendication 1, **caractérisée en ce que** la condition de fonctionnement pré-définie dans le module de test (M1) pour l'activation du module de programme (M2), qui est prévu pour l'adaptation du rapport de démultiplication nominal de la boîte de vitesses, est une réduction pré-définie de la vitesse du véhicule (dv_F/dt) ou une réduction du régime de sortie (dn_ab/dt).

3. Méthode selon une des revendications 1 ou 2, **caractérisée en ce que** dans le module de test (M1) est vérifié dans une première fonction de différenciation (F1) si - à partir d'une commande ABS prévue en tant qu'unité de commande externe - un signal "ABS activé" est transmis au dispositif de commande ; si cela est le cas, le module de programme (M2) est démarré.

4. Méthode selon une des revendications 1, 2 ou 3, **caractérisée en ce que** dans le module de programme (M1) est démarrée une autre fonction de différenciation (F5) pour vérifier si un frein du véhicule est actionné.

5. Méthode selon la revendication 4, **caractérisée en ce que** en cas d'un résultat de requête négatif de la fonction de différenciation (F1) est démarrée une autre fonction de différenciation (F5).

6. Méthode selon la revendication 5, **caractérisée en ce que** en cas d'un résultat de requête négatif de l'autre fonction de différenciation (F5) est démarrée la fonction de traitement (F6) pour l'adaptation du rapport de démultiplication nominal (i_v_soll) au rapport de démultiplication pré-défini et régulier, et **en ce que** après le traitement ou l'annulation de la fonction de traitement (F6) est redémarré le module de test (M1).

7. Méthode selon une des revendications 4, 5 ou 6, **caractérisée en ce que** en cas d'un résultat positif de la requête de l'autre fonction de différenciation (F5) est démarrée une fonction de test (F7) pour déterminer si la réduction de la vitesse du véhicule (dv_F/dt) ou la réduction du régime de sortie (dn_ab/dt) sont inférieures d'une valeur limite donnée ((dv_F/dt)_grenz, (dn_ab/dt)_grenz).

8. Méthode selon la revendication 7, **caractérisée en ce que** en cas d'un résultat négatif de la fonction de test (F7) est démarrée la fonction de traitement (F6) pour l'adaptation du rapport de démultiplication nominal de la boîte de vitesses (i_v_soll) au rapport de démultiplication pré-défini et régulier de la boîte de vitesses (i_v_strategie) et **en ce que** après le traitement ou l'annulation de la fonction de traitement (F6) le module de test (M1) est réactivé.

9. Méthode selon une des revendications 7 ou 8, **caractérisée en ce que** en cas d'un résultat positif de la requête de la fonction de test (F7) est démarré le module de programme (M2).

10. Méthode selon une des revendications 2 à 9,**caractérisée en ce que** les valeurs de consigne du rapport de démultiplication de la boîte de vitesses (i_v_soll), les valeurs limite de la réduction de la vitesse du véhicule ((dv_F/dt)_grenz = f(v_F)) ou la réduction du régime de sortie ((dn_ab/dt)_grenz = f(n_ab)) sont enregistrées dans un champ caractéristique du boîtier de commande électronique de la boite de vitesses.

11. Méthode selon la revendication 1, **caractérisée en ce que** la condition de fonctionnement pré-définie dans le module de test (M1') pour l'activation du module de programme (M2') consiste en un démarrage avec un bas coefficient de frottement de la chaussée.

12. Méthode selon la revendication 11, **caractérisée en ce que** dans le module de programme (M1') est vérifié - dans une première fonction de différenciation (F8) - si un contacteur "Stratégie de conduite hiver" est reconnu comme activé par le dispositif de commande.

13. Méthode selon la revendication 12, **caractérisée en ce que** en cas d'un résultat positif de la requête de la première fonction de différenciation (F8) est activée une autre fonction de différenciation (14) pour déterminer si le rapport de démultiplication de la boîte de vitesses existant (i_v_ist) est plus élevé du rapport de démultiplication de démarrage en mode hiver (i_anfahr_w) associé à la condition de fonctionnement déterminée;
au cas contraire, dans la fonction de traitement (F15) est déterminé le rapport de démultiplication de démarrage en mode hiver (i_anfahr_w) en tant que rapport de démultiplication de démarrage normal (i_anfahr).

14. Méthode salon une des revendications 1, 11, 12 ou 13 **caractérisée en ce que** le rapport de démultiplication de démarrage en mode hiver (i_anfahr_w) de la boîte de vitesses se trouve entre un rapport de démultiplication le plus court possible (i_LOW) et un rapport de démultiplication le plus long possible (i_OD) de la boîte de vitesses.

15. Méthode selon la revendication 12, **caractérisée en ce que** en cas d'un résultat négatif de la requête de la première fonction de différenciation (F8) est déterminée, en tant que rapport de démultiplication de démarrage normal (i_anfahr) dans la fonction de traitement (F9) - le rapport de démultiplication le plus court possible (i_LOW) et **en ce que** dans une fonction de différenciation y associée (F11) est vérifié si la vitesse du véhicule (v_F) ou le régime de sortie (n_ab) de la boîte de vitesses est plus bas d'une valeur limite donnée (v_grenz, n_ab_grenz).

16. Méthode selon la revendication 15, **caractérisée en ce que** en cas d'un résultat de la requête de la fonction de différenciation associée (F11) selon laquelle la vitesse du véhicule (v_F) ou le régime de sortie (n_ab) de la boîte de vitesses sont inférieurs à la valeur limite /v_grenz, n_ab_grenz) est démarrée une autre fonction de différenciation (F12) pour vérifier si le rapport de démultiplication existant (i_v_ist) de la boîte de vitesses est supérieur au rapport de démultiplication de démarrage normal (i_anfahr).

17. Méthode selon la revendication 15, **caractérisée en ce que** le système ramène au module de test (M1') si la vitesse du véhicule (v_F) ou le régime de sortie (n_ab) de la boîte de vitesses sont plus élevés de la valeur limite (v_grenz, n_ab_grenz) ou si le rapport de démultiplication de la boîte de vitesses (i_v_ist) est inférieur au rapport de démultiplication de démarrage normal (i_anfahr).

18. Méthode selon les revendications 16 ou 17, **caractérisée en ce que** le rapport de démultiplication de démarrage normal (i_anfahr) est réglé en tant que rapport de démultiplication nominal de la boîte de vitesses (i_v_soll) si le rapport de démultiplication de la boîte de vitesses existant (i_v_ist) est supérieur au rapport de démultiplication de démarrage normal (i_anfahr) avant que le système ne ramène au Module de test (M1').

19. Méthode selon les revendications 11 à 18, **caractérisée en ce que** dans le module de test (M1') dans une première fonction de différenciation (F8) est vérifié si le bloc hydraulique reconnaît une situation de conduite "Hiver" par l'intermédiaire d'une élaboration de grandeurs de conditions de conduite.

20. Méthode selon une des revendications précédentes, **caractérisée en ce que** le rapport de démultiplication nominal pré-défini (i_v_ABS, i_anfahr_w) est enregistré en tant que valeur discrète dans le calculateur de la boîte de vitesses.

21. Méthode selon une des revendications précédentes, **caractérisée en ce que** le rapport de démultiplication nominal pré-défini (i_v_ABS, i_anfahr_w) est calculé à l'intérieur du boîtier de commande électronique de la boîte de vitesses et en fonction du point de fonctionnement respectif.

22. Méthode selon une des revendications précédentes, **caractérisée en ce que** l'embrayage de démarrage est situé sur le côté secondaire du variateur.
